Europäisches Patentamt

European Patent Office

Office européen des brevets

(19)

(11) Numéro de publication : **0 291 391 B1**

# (12) FASCICULE DE BREVET EUROPEEN

(45) Date de publication du fascicule du brevet :
**31.07.91 Bulletin 91/31**

(51) Int. Cl.$^5$ : **B60R 16/02, H01R 35/04**

(21) Numéro de dépôt : **88401082.8**

(22) Date de dépôt : **04.05.88**

(54) **Dispositif de connexion pour un ensemble de commutation porté par la colonne de direction d'un véhicule automobile.**

(30) Priorité : **06.05.87 FR 8706387**

(43) Date de publication de la demande :
**17.11.88 Bulletin 88/46**

(45) Mention de la délivrance du brevet :
**31.07.91 Bulletin 91/31**

(84) Etats contractants désignés :
**DE ES GB IT**

(56) Documents cités :
**FR-A- 2 568 421**
**GB-A- 2 027 293**
**US-A- 4 547 636**

(73) Titulaire : **JAEGER**
**2, rue Baudin**
**F-92303 Levallois-Perret (FR)**

(72) Inventeur : **Lagier, Daniel**
**135, rue des Ombraies**
**F-92000 Nanterre (FR)**

(74) Mandataire : **Martin, Jean-Jacques et al**
**Cabinet REGIMBEAU 26, Avenue Kléber**
**F-75116 Paris (FR)**

EP 0 291 391 B1

## Description

La présente invention concerne le domaine des dispositifs de connexion.

La présente invention concerne plus précisément un dispositif de connexion pour un ensemble de commutation porté par la colonne de direction d'un véhicule automobile

On a décrit dans les documents FR-A-2568421 et US-A-4547636 des dispositifs de connexion pour véhicules automobiles permettant le transfert de courant entre un élément fixe porté par le tube de protection fixé sur le chassis et un élément tournant porté par la colonne de direction équipée d'un volant.

On a par ailleurs décrit dans le document GB-A-2027293 un dispositif de connexion permettant le transfert de courant entre différents panneaux modulaires articulés.

Un premier but de la présente invention est de proposer un dispositif de connexion permettant de raccorder un ensemble de commutation porté par une colonne de direction réglable en hauteur, à une platine fixe solidaire du chassis du véhicule.

Un autre but de la présente invention est de proposer un dispositif de connexion apte à permettre un montage automatisé de l'ensemble de commutation associé.

Ces différents buts sont atteints dans le cadre de la présente invention grâce à un dispositif de connexion comprenant deux éléments de connexion liés respectivement à un ensemble de commutation porté par une colonne de direction réglable en hauteur et à une platine fixe solidaire du chassis du véhicule et destinés à venir en contact mutuel, dans lequel l'un des éléments de connexion comprend au moins une piste électriquement conductrice allongée, rectiligne, apte à rester en contact avec l'autre élément de connexion lors de déplacements de l'ensemble de commutation dans une direction générale parallèle à la direction de ladite piste conductrice.

La structure proposée dans le cadre de la présente invention permet de maintenir un contact entre les deux éléments de connexion quelle que soit la position de la colonne de direction.

De plus, l'utilisation d'un élément de connexion qui comporte une piste conductrice allongée facilite largement l'assemblage automatisé d'un commutateur prééquipant la colonne de direction.

Selon une caractéristique avantageuse de l'invention les deux éléments de connexion sont pourvus de moyens de serrage aptes à renforcer le contact mutuel entre les deux éléments ; ces moyens de serrage sont de préférence reliés aux moyens de blocage associés à la colonne de direction, pour être actionnés simultanément à ceux-ci.

Selon un mode de réalisation considéré actuellement comme préférentiel, l'un des éléments de connexion comprend un corps support en matériau souple au moins légèrement compressible pourvu d'une pluralité de rainures rectilignes parallèles qui logent chacune un organe de connexion allongé rectiligne. Lorsque les moyens de serrage compriment le corps support, un contact intime est garanti entre les deux éléments de connexion.

D'autres caractéristiques, buts et avantages de la présente invention apparaîtront à la lecture de la description détaillée qui va suivre et en regard des dessins annexés donnés à titre d'exemple non limitatif et sur lesquels :

— la figure 1 représente une vue schématique latérale d'une colonne de direction de véhicule automobile équipée d'un dispositif de connexion conforme à la présente invention,

— la figure 2 représente une vue schématique en coupe du dispositif selon un plan de coupe transversal à l'axe de la colonne de direction, référencé schématiquement II-II sur la figure 1, et

— la figure 3 représente une vue schématique orthogonale à la figure 2 et illustrée schématiquement par la flèche référencée III sur celle-ci, tandis que

— la figure 4 représente une vue schématique agrandie de l'élément de connexion comprenant les pistes électriquement conductrices allongées.

On aperçoit sur les figures annexées une colonne de direction 10 portant un volant 12 et susceptible de pivotement autour d'un axe horizontal 14. Le débattement angulaire de la colonne de direction 10 autour de l'axe 14 est illustré schématiquement sous la référence α.

La colonne 10 est équipée de moyens de blocage aptes à immobiliser celle-ci dans une position quelconque choisie, lors de son pivotement autour de l'axe 14.

Selon le mode de réalisation illustré sur les figures annexées, mais non limitatif, les moyens de blocage comprennent un étrier 18 fixé sur la colonne de direction 10 et deux flasques 22, 24 solidaires du châssis du véhicule. Les faces latérales de l'étrier 18 et les deux flasques 22, 24 s'étendent transversalement à l'axe 14 de pivotement de la colonne 10. Les flasques 22, 24 sont susceptibles de pincer l'étrier 18 grâce à un système fileté 20.

Le système fileté 20 comprend une tige filetée 26 traversant l'étrier 18 et les deux flasques 22, 24, et qui coopère avec un écrou de serrage 28.

On aperçoit également sur les figures annexées, une platine fixe 30 solidaire du châssis du véhicule et une coquille d'habillage 16 solidaire de la colonne de direction.

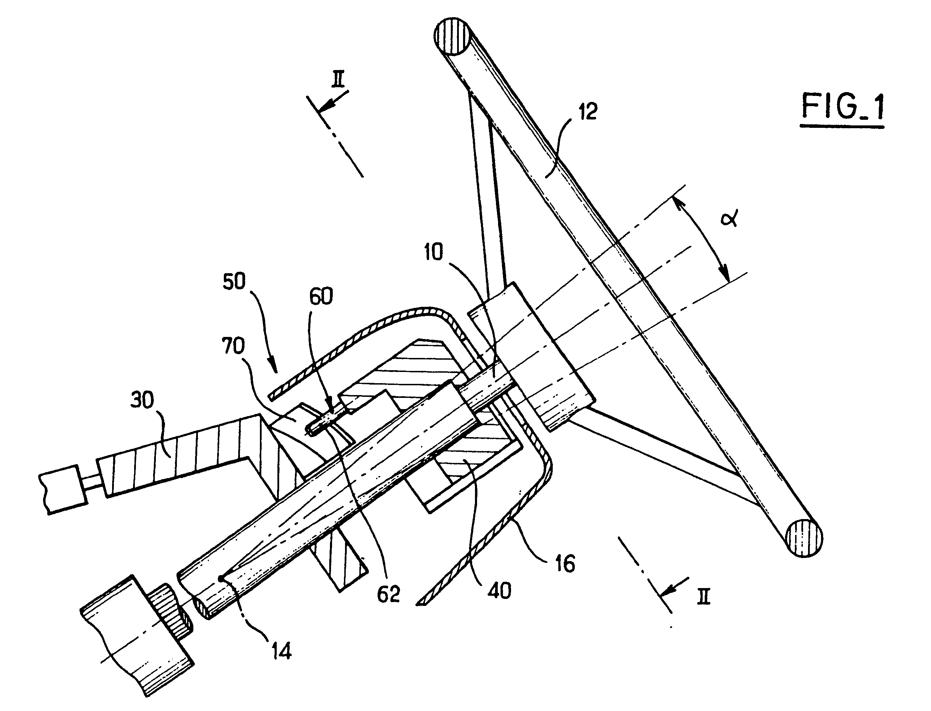

La colonne de direction 10 porte un ensemble de commutation 40 schématiquement illustré sur la figure 1. De nombreux ensembles de commutation ont déjà été proposés. Pour cette raison la structure de l'ensemble de commutation 40 ne sera pas décrite plus en détail par la suite.

Dans le cadre de la présente invention, il est prévu un dispositif de connexion 50 qui comprend deux éléments de connexion 60, 70.

Les éléments de connexion 60, 70 sont liés respectivement à l'ensemble de commutation 40 et à la platine 30. Ces éléments de connexion sont destinés à venir en contact mutuel, pour relier l'ensemble de commutation 40 aux divers accessoires du véhicule, par exemple avertisseur sonore, ou moyen de signalisation lumineuse.

Selon l'illustration donnée sur la figure annexée, l'élément de connexion 60 lié à l'ensemble de commutation 40 constitue un élément de connexion mâle tandis que l'élément de connexion 70 lié à la platine 30 constitue un élément de connexion femelle.

Plus précisément, de préférence, chacun des éléments de connexion comprend une pluralité de voies.

Pour cette raison, l'élément de connexion 60 lié à l'ensemble de commutation 40 comprend une pluralité de broches parallèles.

L'élément de connexion 70 lié à la platine 30 comprend un corps support 72 en matériau souple au moins légèrement compressible. Le corps 72 est pourvu d'une pluralité de rainures rectilignes parallèles 74, ces rainures 74 s'étendent transversalement à l'axe 14 de pivotement de la colonne 10. Chacune des rainures 74 loge un organe de connexion allongé rectiligne 80.

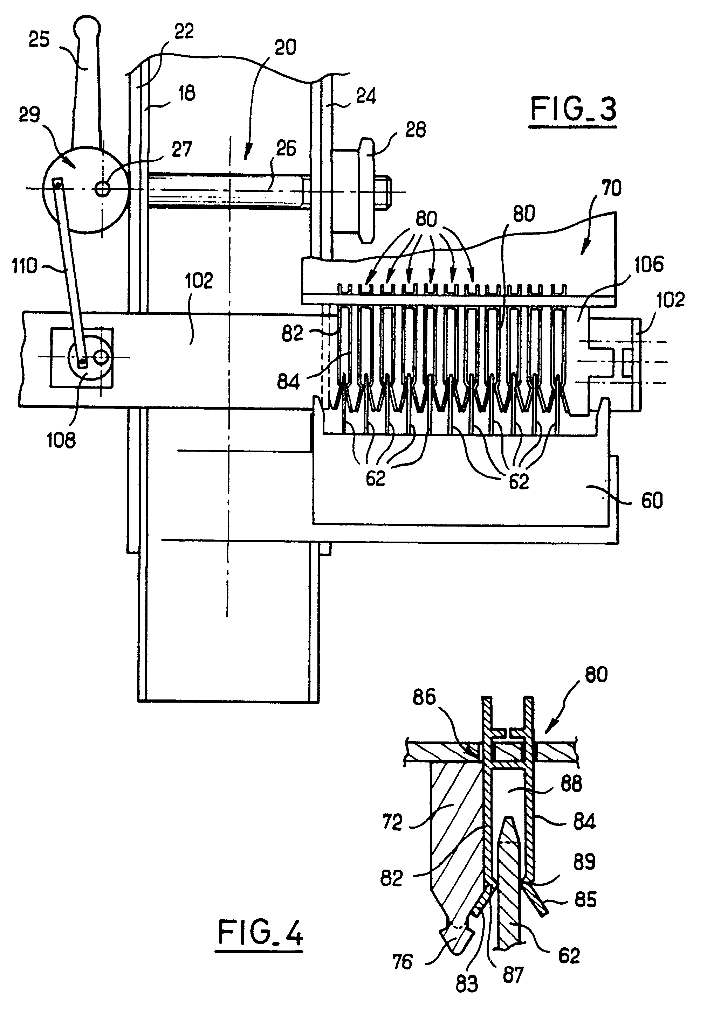

Comme illustré sur la figure 4, de préférence, chaque organe de connexion 80 comprend deux lamelles 82, 84, généralement parallèles, reliées par leur base et formant des pinces de connexion. Les organes de connexion 80 sont fixés par leur base 86 sur le corps support 72. La base 86 des organes de connexion 80 peut prendre de nombreuses formes à cet effet. Pour cette raison la forme des organes de connexion 80 ne sera pas décrite plus en détail par la suite.

Les lamelles 82, 84 s'étendent transversalement à l'axe 14 de pivotement de la colonne de direction 10, contre les parois internes des rainures 74.

Les broches appartenant à l'élément de connexion 60 sont destinées à pénétrer dans l'espace 88 compris entre les deux lamelles 82, 84 d'un même organe. Pour faciliter l'engagement des broches 62 de l'élément de connexion 60 dans l'espace 88, de préférence comme illustré sur la figure 4, les bords libres 83, 85 des lamelles 82, 84, sont divergentes. De plus, pour garantir que les broches 62 pénètrent dans l'espace 88 et donc éviter que les broches puissent pénétrer entre l'une des lamelles 82, 84 et la paroi de la rainure 74 associée, le corps 72 est pourvu, entre les rainures 74 et du côté de l'engagement des broches, de structures évasées 76 qui recouvrent le bord libre 83, 85 des lamelles 82, 84 (voir figure 4).

On notera de plus que pour garantir un bon contact entre les broches 62 et les organes de connexion 80 ceux-ci sont pourvus de préférence, sur la surface interne en regard des lamelles 82, 84 et au voisinage des bords libres 83, 85, par déformation, d'un resserrement 87, 89 destiné à serrer chaque broche 62 associée.

On va maintenant décrire la structure de moyens de serrage 100 destinés à renforcer le contact mutuel entre les éléments de connexion 60, 70 et plus précisément entre les broches 62 et les organes de connexion 80 respectivement associés.

Comme illustré sur les figures le corps 72 de l'élément 70 repose contre la surface externe de l'un des flasques 22, 24 précités ou un élément lié à celui-ci.

Les moyens de serrage 100 comprennent un équipage 102 et un ressort 104. Le ressort 104 est disposé entre le corps 72 et l'équipage mobile 102. Lorsque cela est requis l'équipage 102 est déplacé en rapprochement du corps 72 pour solliciter et comprimer celui-ci afin de resserrer les organes de connexion 80 sur une broche 62 associée. Le ressort 104 intercalé entre l'équipage 102 et le corps 72 limite l'effort exercé sur le corps 62 et les organes de connexion.

De préférence, une entretoise 106 est intercalée entre le ressort 104 et le corps 72.

L'équipage mobile 102 peut être actionné par de nombreux moyens.

Selon le mode de réalisation préférentiel illustré sur les figures annexées, l'équipage mobile 102 est actionné par des moyens reliés aux moyens de blocage de la colonne de direction pour être actionnés simultanément à ceux-ci.

Plus précisément encore, selon la réalisation donnée sur les figures annexées, l'écrou 28 précité en prise avec la tige filetée 26 sert de pré-réglage, le serrage proprement dit après positionnement approprié de la colonne de direction 10 étant réalisé à l'aide d'une came 29 montée à pivotement sur la tige 26 autour d'un axe 27 excentré. La came 29 est commandée à déplacement autour de l'axe 27 par un levier 25.

Les moyens assurant le déplacement de l'équipage mobile 102 comprennent également une came excentrée 108. De préférence, la came 108 est reliée à la came de blocage 29 précitée par l'intermédiaire d'une bielle 110. Ainsi, les moyens de serrage agissant sur l'élément de connexion 70 sont commandés simultanément aux moyens de blocage 20.

Le fonctionnement du dispositif qui vient d'être décrit est le suivant.

Lorque la came 29 est placée en position desserrée, la colonne de direction 10 peut être déplacée librement à pivotement autour de l'axe 14 en vue d'un réglage en hauteur. Simultanément, la came 108 associée à l'équipage mobile 102 est placée en position desserrée. De ce fait, les broches 62 peuvent se déplacer librement dans les organes de connexion 80 lors du réglage de la colonne de direction 10. Lorsque la came 29 est déplacée en position de serrage, la colonne de direction 10 est immobilisée fermement.

Simultanément au déplacement de la came 29, la came 108 est déplacée en position de serrage pour solliciter l'équipage 102 contre le corps 72 afin de comprimer celui-ci. Les organes de connexion 80 se resserrent alors sur les broches 62 pour garantir un contact intime entre les deux éléments de connexion 60 et 70.

Grâce à la forme allongée des organes de connexion 80, transversalement à l'axe de pivotement 14, les broches 62 et les organes de connexion 80 restent en contact permanent quelle que soit la position de la colonne de direction 10 autour de l'axe de pivotement 14.

Bien entendu la présente invention n'est pas limitée au mode de réalisation particulier qui vient d'être décrit.

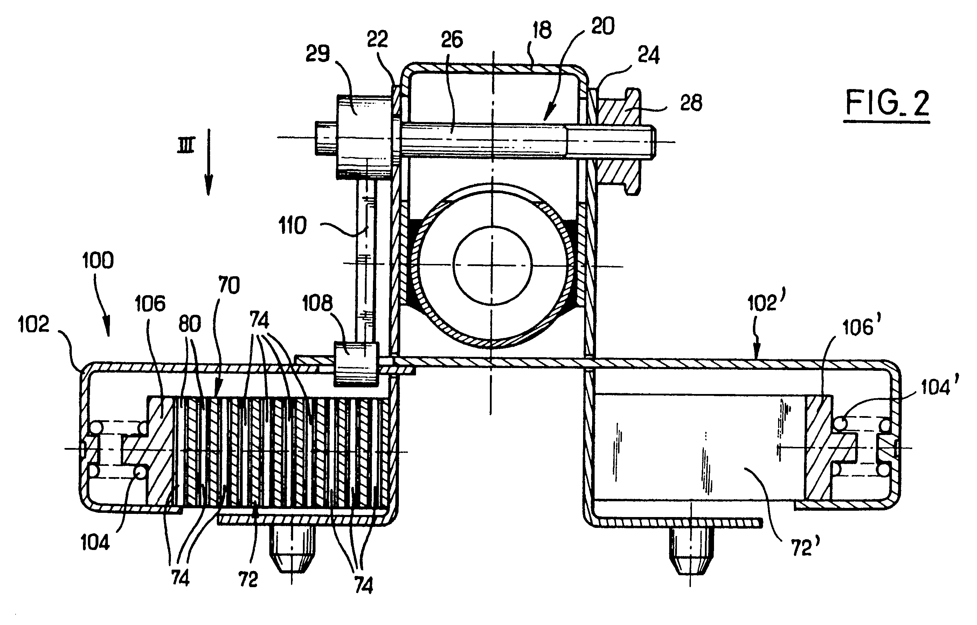

A titre d'exemple, comme illustré sur les figures 2 et 3 annexées, les éléments de connexion conformes à la présente invention peuvent être décomposés chacun en deux sous-ensembles, le cas échéant symétriques par rapport à la colonne de direction. Sur la figure 2, on a illustré sous les mêmes références numériques que précédemment, mais assorties d'un indice, un deuxième sous-ensemble commandé par la même came excentrée 108.

De plus, selon le mode de réalisation précédemment décrit, les pistes électriques allongées sont ménagées sur l'élément de connexion femelle. Le cas échéant, les pistes conductrices allongées pourraient être ménagées sur l'élément de connexion mâle.

De même la position des éléments de connexion peut être inversée en ce sens que l'élément de connexion pourvu des pistes conductrices allongées pourrait être rendu solidaire de la colonne de direction 10 elle-même.

Par ailleurs, la structure des moyens aptes à solliciter le serrage des organes de connexion 80 sur les broches 62 peut faire l'objet de nombreuses variantes de réalisation. A titre d'exemple on a illustré sur les figures 2 et 3 annexées deux exemples de réalisation de came 108 reliée à la came 29 par l'intermédiaire d'une bielle 110.

## Revendications

1. Dispositif de connexion pour un ensemble de commutation porté par une colonne de direction réglable en hauteur d'un véhicule automobile, comprenant deux éléments de connexion (60, 70) liés respectivement à l'ensemble de commutation (40) et à une platine fixe (30) solidaire du chassis du véhicule et destinés à venir en contact mutuel, dans lequel l'un des éléments de connexion (70) comprend au moins une piste électriquement conductrice allongée rectiligne (80) apte à rester en contact avec l'autre élément de connexion lors de déplacements de l'ensemble de commutation (40) dans une direction générale parallèle à la direction de ladite piste conductrice.

2. Dispositif de connexion selon la revendication 1 pour un ensemble de commutation (40) porté par une colonne de direction de véhicule automobile (10) réglable en hauteur par pivotement et pourvue de moyens de blocage (20), caractérisé par le fait que les deux éléments de connexion (60, 70) sont pourvus de moyens de serrage (100) aptes à renforcer le contact mutuel entre les deux éléments.

3. Dispositif de connexion selon la revendication 2, caractérisé par le fait que les moyens de serrage (20) sont reliés aux moyens de blocage (100) pour être actionnés simultanément à ceux-ci.

4. Dispositif de connexion selon l'une des revendications 1 à 3, caractérisé par le fait que chaque élément de connexion (60, 70) comprend une pluralité de voies.

5. Dispositif de connexion selon l'une des revendications 1 à 4, caractérisé par le fait que l'un des éléments de connexion (60, 70) comprend un corps support (72) en matériau souple au moins légèrement compressible pourvu d'une pluralité de rainures rectilignes parallèles (74) qui logent chacune un organe de connexion allongé rectiligne (80).

6. Dispositif de connexion selon la revendication 5, caractérisé par le fait que chaque organe de connexion allongé rectiligne (80) comprend deux lamelles électriquement conductrices (82, 84) généralement parallèles, reliées par leur base (86) et formant des pinces de connexion femelle.

7. Dispositif de connexion selon les revendications 2 et 5 prises en combinaison, caractérisé par le fait qu'un ressort (104) est intercalé entre les moyens de serrage (100) et le corps support en matériau souple (72).

8. Dispositif de connexion selon la revendication 6, caractérisé par le fait que le corps support (72) possède entre les rainures (74), des structures (76) qui recouvrent le bord libre d'engagement (83, 85) des lamelles (82, 84).

9. Dispositif de connexion selon les revendications 2 et 5 prises en combinaison, caractérisé par le fait que les moyens de blocage (20) comprennent une came excentrée (29) et par le fait que les moyens de serrage (100) comprennent également une came excentrée (108), reliée par l'intermédiaire d'une bielle (110), à la came (29) des moyens de blocage et adaptés pour agir sur un équipage mobile (102) apte à comprimer le corps support (72).

## Claims

1. Connection device for a switching unit carried by a height-adjustable steering column of a motor vehicle, comprising two connection elements (60, 70) linked respectively to the switching unit (40) and to a fixed plate (30) integral with the chassis of the vehicle, and intended to come into mutual contact, in which one of the connection elements (70) comprises at least one rectilinear, elongated, electrically conducting track (80) capable of remaining in contact with the other connection element during displacements of the switching unit (40) in a general direction parallel to the direction of the said conducting track.

2. Connection device according to Claim 1 for a switching unit (40) carried by a motor vehicle steering column (10) adjustable in terms of height by pivoting and provided with locking means (20), characterised in that the two connection elements (60, 70) are provided with clamping means (100) capable of reinforcing the mutual contact between the two elements.

3. Connection device according to Claim 2, characterised in that the clamping means (100) are joined to the locking means (20) in order to be actuated simultaneously with the latter.

4. Connection device according to one of Claims 1 to 3, characterised in that each connection element (60, 70) comprises a plurality of channels.

5. Connection device according to one of Claims 1 to 4, characterised in that one of the connection elements (60, 70) comprises a support body (72) made from an at least slightly compressible flexible material and provided with a plurality of parallel rectilinear grooves (74) which each accommodate one rectilinear, elongated connection member (80).

6. Connection device according to Claim 5, characterised in that each rectilinear, elongated connection member (80) comprises two electrically conducting blades (82, 84) which are generally parallel, joined at their base (86) and form female-connection terminals.

7. Connection device according to Claims 2 and 5 taken together, characterised in that a spring (104) is inserted between the clamping means (100) and the support body made from a flexible material (72).

8. Connection device according to Claim 6, characterised in that the support body (72) has, between the grooves (74), structures (76) which cover the free engaging edge (83, 85) of the blades (82, 84).

9. Connection device according to Claims 2 and 5 taken together, characterised in that the locking means (20) comprise an eccentric cam (29), and in that the clamping means (100) likewise comprise an eccentric cam (108) connected, via a connecting rod (110), to the cam (29) of the locking means and adapted in order to act on a movable element (102) capable of compressing the support body (72).

## Patentansprüche

1. Verbindungseinrichtung für eine Schalteinheit an einer höhenverstellbaren Lenksäule eines Kraftfahrzeuges, welche zwei Verbindungselemente (60, 70) aufweist, die mit der Schalteinheit (40) bzw. mit einer feststehenden, mit dem Rahmen des Fahrzeuges fest verbundenen Platine (30) verbunden und zur wechselseitigen Kontaktgabe bestimmt sind, wobei das eine der Verbindungselemente (70) mindestens eine geradlinig langgestreckte elektrische Leiterbahn (80) umfaßt, welche so ausgelegt ist, daß sie mit dem anderen Verbindungselement in Kontakt bleibt, wenn die Schalteinheit (40) in einer zu der Richtung der Leiterbahn allgemein parallelen Richtung verstellt wird.

2. Verbindungseinrichtung nach Anspruch 1 für eine Schalteinheit (40) an einer Lenksäule eines Kraftfahrzeuges (10), welche durch Verschwenken höhenverstellbar ist und welche mit Verriegelungsmitteln (20) versehen ist, dadurch gekennzeichnet, daß die beiden Verbindungselemente (40, 70) mit Klemmeinrichtungen (100) zur Verstärkung des wechselseitigen Kontaktes zwischen den beiden Elementen versehen sind.

3. Verbindungseinrichtung nach Anspruch 2, dadurch gekennzeichnet, daß die Klemmeinrichtungen (100) mit den Verriegelungsmitteln (20) zur gleichzeitigen Betätigung mit diesen verbunden sind.

4. Verbindungseinrichtung nach einem der Ansprüche 1 bis 3, dadurch gekennzeichnet, daß jedes Verbindungselement (60, 70) eine Mehrzahl von Spuren umfaßt.

5. Verbindungseinrichtung nach einem der Ansprüche 1 bis 4, dadurch gekennzeichnet, daß das eine der Verbindungselemente (60, 70) einen Trägerkörper (72) aus nachgiebigem, zumindest leicht zusammendrückbaren Material umfaßt, welcher mit einer Mehrzahl von geradlinig parallelen Nuten (74) versehen ist, welchletztere jeweils ein geradlinig langgestrecktes Verbindungsorgan (80) enthalten.

6. Verbindungseinrichtung nach Anspruch 5, dadurch gekennzeichnet, daß jedes geradlinig langgestreckte Verbindungsorgan (80) zwei elektrisch leitende, allgemein parallele Lamellen (82, 84) umfaßt, welche über ihre Basis (86) verbunden sind und Kontakt-Klemmbuchsen bilden.

7. Verbindungseinrichtung nach den Ansprüchen 2 und 5 in Kombination, dadurch gekennzeichnet, daß eine Feder (104) zwischen den Verriegelungsmitteln (100) und dem Trägerkörper aus nachgiebigem Material (72) eingefügt ist.

8. Verbindungseinrichtung nach Anspruch 6, dadurch gekennzeichnet, daß der Trägerkörper (72) zwischen den Nuten (74) Strukturen (76) aufweist, welche den eingriffsfreien Rand (83, 85) der Lamellen (82, 84) verdecken.

9. Verbindungseinrichtung nach den Ansprüchen 2 und 5 in Kombination, dadurch gekennzeichnet, daß die Verriegelungsmittel (20) einen Exzenternocken (29) aufweisen und daß die Klemmeinrichtungen (100) ebenfalls einen Exzenternocken (108) aufweisen, welcher mittels einer Pleuelstange (110) mit dem Nocken (29) der Verriegelungsmittel verbunden ist und auf ein bewegliches Organ (102) zum Zweck eines Zusammendrückens des Trägerkörpers (72) einzuwirken vermag.

FIG_1

FIG.2

EP 0 291 391 B1

FIG. 3

FIG. 4